(19) Europäisches Patentamt
European Patent Office
Office européen des brevets

(11) **EP 2 565 391 B1**

(12) **EUROPÄISCHE PATENTSCHRIFT**

| | |
|---|---|
| (45) Veröffentlichungstag und Bekanntmachung des Hinweises auf die Patenterteilung:<br>**25.07.2018 Patentblatt 2018/30** | (51) Int Cl.:<br>***F01D 25/00*** *(2006.01)*     ***B05B 1/20*** *(2006.01)*<br>***B08B 3/02*** *(2006.01)*     ***F02B 77/04*** *(2006.01)* |

(21) Anmeldenummer: **12182168.0**

(22) Anmeldetag: **29.08.2012**

(54) **Reinigunsvorrichtung einer Abgasturbine und zugehörige Abgasturbine, Nutzturbine und Abgasturbolader**

Cleaning device of a exhaust gas turbine and corresponding exhaust gas turbine, power turbine and exhaust gas turbocharger

Dispositif de nettoyage d'une turbine à gaz d'échappement, et turbine à gaz d'échappement, turbine utilitaire et turbocompresseur à gaz d'échappement associés

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2011 DE 102011082089**

(43) Veröffentlichungstag der Anmeldung:
**06.03.2013 Patentblatt 2013/10**

(73) Patentinhaber: **ABB Turbo Systems AG**
**5400 Baden (CH)**

(72) Erfinder:
• **Behr, Thomas**
**8052 Zürich (CH)**

• **Baumberger, Florian**
**8048 Zürich (CH)**
• **Fischer, Magnus**
**8049 Zürich (CH)**
• **Städeli, Markus**
**8005 Zürich (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**DE-A1- 10 354 864**     **US-A1- 2009 084 411**
**US-A1- 2010 206 966**

EP 2 565 391 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Technisches Gebiet

Die Erfindung bezieht sich auf das Gebiet der mit Abgasen von Brennkraftmaschinen beaufschlagten Strömungsmaschinen. Sie betrifft eine Reinigungsvorrichtung einer Abgasturbine, eine Abgasturbine oder Nutzturbine mit einer derartigen Reinigungsvorrichtung sowie einen Abgasturbolader mit einer Abgasturbine mit einer derartigen Reinigungsvorrichtung.

Abgasturbinen werden in Abgasturboladern zum Aufladen von Brennkraftmaschinen oder als Nutzturbinen zum Umwandeln der in den Abgasen von Brennkraftmaschinen enthaltenen Energie in mechanische oder elektrische Energie eingesetzt.

In Abhängigkeit von der konkreten Betriebssituation der Brennkraftmaschine und der Zusammensetzung der zum Antrieb der Brennkraftmaschine verwendeten Brennstoffe, kommt es in der Abgasturbine früher oder später zu einer Verschmutzung der Turbinenstufe, also der Turbinenschaufeln am Laufrad und der Leitschaufeln des Düsenringes, sowie der verschiedenen Turbinengehäuseteile. Solche Schmutzablagerungen können im Bereich des Düsenrings zu einem schlechteren Turbinenwirkungsgrad führen und demzufolge eine Verringerung der Leistung der nachfolgenden Maschinen, beispielsweise des mittels Abgasturbine angetriebenen Verdichters und der aufgeladenen Brennkraftmaschine selbst, bewirken. Als Folge dessen kann es zu einer Erhöhung der Abgastemperaturen im Brennraum kommen, wodurch sowohl die Brennkraftmaschine als auch der Turbolader thermisch überbeansprucht werden können. Bei der Brennkraftmaschine kann insbesondere eine Beschädigung oder gar Zerstörung der Auslassventile auftreten.

Lagert sich auf dem Düsenring und auf den Turbinenschaufeln eines mit einer ViertaktBrennkraftmaschine verbundenen Turboladers eine Schmutzschicht ab, so ist ausserdem mit einem Ansteigen der Turboladerdrehzahl und folglich des Ladedrucks und des Zylinderdrucks zu rechnen. Dadurch werden sowohl Bauteile der Brennkraftmaschine als auch des Turboladers zusätzlich zur erhöhten thermischen Belastung auch mechanisch höher beansprucht, was ebenfalls bis zur Zerstörung der betroffenen Bauteile führen kann.

Bei unregelmässiger Verteilung der Schmutzschicht am Umfang der Laufschaufeln des Turbinenrades kann es zu einer Erhöhung der Unwucht des Rotors kommen, wodurch auch die Lagerung der rotierenden Teile beschädigt werden kann.

Kommt es am Turbinengehäuse zu Schmutzablagerungen an der im Bereich radial ausserhalb der Turbinenschaufeln verlaufenden Aussenkontur des Strömungskanals, können aufgrund des reduzierten Radialspiels zwischen Turbinenschaufeln und Turbinengehäuse im Betrieb Berührung auftreten, welche die Turbinenschaufeln beschädigen und im Extremfall unbrauchbar machen können.

Deshalb müssen Düsenring, Turbinenschaufeln und betroffene Bereiche des Turbinengehäuses regelmässig während des Betriebes von ihnen anhaftenden Verschmutzungen befreit werden.

Stand der Technik

Für die Reinigung von Abgasturbinen mit Verschmutzungen aus mit Schweröl betriebenen Brennkraftmaschinen während des Betriebs wird als Reinigungsmittel hauptsächlich unbehandeltes Leitungswasser eingesetzt, welches über eine oder mehrere Düsen stromauf der Turbinenstufe in den Abgasstrom eingespritzt wird.

Eine Reinigungswirkung kann nur in den vom Reinigungsmittel benetzten Flächen der Abgasturbine erreicht werden. Für eine gute Reinigung muss demnach eine homogene Verteilung des Reinigungsmittels in der Kreis- oder Kreisringfläche am Eintritt zur Turbinenstufe realisiert werden.

Es sind verschiedene Konzepte bekannt, die sich in Anzahl und Anordnung der Düsen zur Einspritzung des Reinigungsmittels unterscheiden:

DE3515825A1 offenbart eine Vorrichtung zur Reinigung der Laufschaufeln und des Düsenrings der Axialturbine eines Abgasturboladers mit einem axialsymmetrischen Gaseintrittsgehäuse. Die Reinigungsvorrichtung besteht aus mehreren am Gaseintrittsgehäuse der Axialturbine angeordneten Injektoren mit bis in den Strömungskanal reichenden Düsen und einer Zuleitung für das Reinigungsmittel.

WO2006017952A1 offenbart eine Vorrichtung zur Reinigung der Laufschaufeln und des Düsenrings der Axialturbine eines Abgasturboladers, welche unabhängig von der Form des verwendeten Gaseintrittsgehäuses eingesetzt werden kann. Die Eindüsung des Reinigungsmittels erfolgt über unmittelbar stromauf des Turbineneintritts, auf dem Nabendurchmesser des Düsenrings angeordnete, wandbündige Düsen, wobei jeder Düsenringschaufel eine Düse zugeordnet ist.

EP848150B1 offenbart eine Vorrichtung zur Reinigung der Laufschaufeln und des Düsenrings der Axialturbine eines Abgasturboladers mit einem um 90° abgewinkelten Gaseintrittsgehäuse. Ein einzelner, zylindrischer Düsenkörper mit schlitzförmigen, am Umfang angeordneten Düsenöffnungen ist im Staupunkt der kalottenförmigen, inneren Gehäusewand angeordnet.

WO2005/049972A1 offenbart eine Vorrichtung zur Reinigung der Laufschaufeln und des Düsenrings der Axialturbine eines Abgasturboladers mit einer in den Strömungskanal hineinragenden, stabförmigen Düse. Durch stromab ausgerichtete Einspritzöffnungen wird das Reinigungsmittel mit der Strömung in Richtung Düsenring und Turbinenschaufeln eingespritzt.

DE2120213 offenbart eine Einrichtung zum Entfernen von Ablagerungen an Turbinen, bei welcher in einer Zuführleitung für eine Reinigungsflüssigkeit zur Düsenöffnung ein Ventil zum Schliessen und Freigeben der Zuführleitung angeordnet ist.

US5944483 offenbart eine Vorrichtung zur Reinigung der Laufschaufeln und des Düsenrings der Axialturbine eines Abgasturboladers mit mehreren, in den Strömungskanal hineinragenden, stabförmigen Düsen. Durch Einspritzöffnungen wird das Reinigungsmittel mit der Strömung in Richtung Düsenring und Turbinenschaufeln eingespritzt.

Im Zusammenhang mit Vorrichtungen zur Reinigung von Abgasturbinen steht der Turbinenkonstrukteur folgenden Herausforderungen gegenüber:
Die Eindüsung von Reinigungsflüssigkeit in den Strömungskanal stromauf der Turbine über eine begrenzte Anzahl von Düsen kann zu einer inhomogenen Verteilung der Reinigungsflüssigkeit am Eintritt in die Turbinenstufe führen. Eine grössere Anzahl von verteilt angeordneten Düsen führt zu einer homogeneren Verteilung der Reinigungsflüssigkeit, erhöht jedoch gleichzeitig die Kosten der Reinigungsvorrichtung, durch eine grössere Anzahl von Düsenkörpern und Dichtstellen im Gaseintrittsgehäuse der Abgasturbine.
Es wird daher angestrebt, die Anzahl der Düsenköper auf ein Minimum zu reduzieren. Gleichzeitig werden häufig pro Düsenkörper mehrere Düsenöffnungen realisiert, um eine breitere Verteilung der Reinigungsflüssigkeit zu erreichen. Bei herkömmlichen Reinigungsvorrichtungen werden die Düsenöffnungen eines Düsenkörpers von einem Zuströmkanal mit Reinigungsflüssigkeit versorgt und haben daher alle den gleichen Vordruck vor den Düsenöffnungen. Daraus folgt, dass die Austrittsgeschwindigkeit c aller Düsenöffnungen (unter Annahme ähnlicher Düsengeometrie und damit vergleichbarer Ausflusszahlen $\mu$) in erster Näherung gleich ist.

$$ c = \frac{\dot{V}}{A} = \mu \sqrt{\frac{2 \cdot dp}{\rho}} $$

Die Impulsstromdichte $\rho_W \cdot c_W^2$, welche massgebend für die Eindringtiefe der Reinigungsflüssigkeit in den Strömungskanal ist, kann somit für die einzelnen Düsenöffnungen eines Düsenkörpers nicht frei gewählt werden. Insbesondere für nicht axialsymmetrische Gaseintrittsgehäuse kann sich dadurch das Problem ergeben, dass die einzelnen Düsenöffnungen nicht auf den optimalen, individuellen Reinigungsmittel-Impuls ausgelegt werden können.
Die Verteilung der Reinigungsflüssigkeit am Eintritt in die Turbinenstufe während der Reinigung ist von einer Vielzahl von Parametern abhängig, beispielsweise der Geometrie des Strömungskanals des Gaseintrittsgehäuses, der Anordnung und Geometrie der Düsen, dem Strömungsfeld des Abgases oder dem Druck der Reinigungsflüssigkeit. Da nahezu jedes Modell einer Brennkraftmaschine einen individuellen Durchmesser der Abgasleitung besitzt, ergibt sich eine Vielzahl von Gaseintrittsgehäusen nicht ähnlicher Geometrie für eine bestimmte Turbolader-Baureihe.
Für das Konzept einer Reinigungsvorrichtung muss eine systematische Auslegungsmethodik verfügbar sein, mittels der eine Reinigungsvorrichtung an die jeweiligen Anforderungen angepasst werden kann.
Die Auslegung mittels experimenteller Methoden ist zu aufwendig, als das sie wirtschaftlich für die Auslegung einer Reinigungsvorrichtung für jedes Gaseintrittsgehäuse eingesetzt werden könnte. Die Auslegung mittels numerischer Strömungsberechnungsprogrammestellt eine effektive und kostengünstige Methode dar. Die Genauigkeit der Auslegung ist jedoch stark abhängig von der Komplexität der Strömungsverhältnisse und der Art der Eindüsung der Reinigungsflüssigkeit in den Abgasstrom. Insbesondere die Simulation des Strahlzerfalls und der Interaktion der eingespritzten Reinigungsflüssigkeit mit den Wänden des Gaskanals ist nur in begrenztem Masse mit guter Genauigkeit möglich. Während der Reinigung wird Reinigungsmittel mit Umgebungstemperatur in den Strömungskanal eingespritzt. Die Abgastemperaturen während der Reinigung liegen im Bereich von ca. 430°C. Die daraus resultierenden Temperaturentschiede führen zu thermomechanischen Spannungsbelastungen aller beteiligten Komponenten.
Die Zuführleitungen der Reinigungsdüsen sind direkt am Turbolader befestigt, woraus sich eine hohe Vibrationsbelastung ergibt, die zu Schäden an den Leitungen führen kann.
Den genannten Beanspruchungen muss durch die Konstruktion der Rohrleitungen und Flanschverbindungen Rechnung getragen werden. Es sind aufwendige und entsprechend kostenintensive Lösungen erforderlich.
Der Einsatz von Mehrdüsenreinigungsvorrichtung erhöht die Komplexität und damit die Kosten der Reinigungsvorrichtung.
US 2010/0206966A1 offenbart eine Vorrichtungen zur Reinigung von Gasturbinen mit einem Düsenkörper mit mehreren Düsenöffnungen, wobei im Düsenkörper vor jeder Düsenöffnung eine Verwirbelungselement vorgesehen ist.
DE 103 54 864 A1 offenbart eine Vorrichtungen zur Reinigung von Gasturbinen gemäß dem Oberbegriff de Anspruchs 1 mit einem Düsenträger mit zwei Gruppen von Düsenöffnungen, wobei die beiden Gruppen individuell mit Reinigungsflüssigkeit versorgt werden, wobei in jeder Zuleitung zu den Düsenöffnungen ein Drosselement angeordnet ist.

US 2009/084411A1 offenbart eine Vorrichtungen zur Reinigung von Gasturbinen mit einem Düsenkörper mit einem drehbaren Düsenkopf, wobei sich der Düsenkopf aufgrund der schrägen Anordnung der Düsenöffnungen selbst in Rotation versetzt.

Kurze Darstellung der Erfindung

Die der Erfindung zugrunde liegende Aufgabe besteht darin, eine Reinigungsvorrichtung für eine Abgasturbine mit einer optimierten Verteilung der Reinigungsflüssigkeit im zu benetzenden Bereich der Abgasturbine zu schaffen. Erfindungsgemäss wird dies mit einer neuartigen Ausführung eines Düsenkörpers mit mehreren Düsenöffnungen erreicht, welcher es ermöglicht, für jede Düsenöffnung eine individuelle Austrittsgeschwindigkeit der Reinigungsflüssigkeit zu realisieren.

Die Zufuhrkanäle zum Zuführen der Reinigungsflüssigkeit zu den einzelnen Düsenöffnungen oder zu Gruppen von Düsenöffnungen sind hierfür mit Drosselstellen zur gezielten Einstellung des Vordrucks der Reinigungsflüssigkeit ausgeführt werden.

Durch die gezielte Auslegung der Drosselstellen im Düsenkörper sowie der Anpassung der Querschnittsflächen der Düsenöffnungen kann für jede einzelne Düsenöffnung eines Düsenkörpers eine individuelle Austrittsgeschwindigkeit der Reinigungsflüssigkeit und ein individueller Volumenstrom realisiert werden. Es wird damit ermöglicht, den optimalen Strömungsimpuls für die Benetzung eines bestimmten Bereichs einzustellen. Zudem kann für die Benetzung dieses Bereichs die gewünschte Menge an Reinigungsflüssigkeit individuell eingestellt werden. Auf diese Weise kann mit einer oder einigen wenigen Düsen eine homogene Konzentrationsverteilung der Reinigungsflüssigkeit vor der Turbinenstufe erreicht werden.

Der durch die Erfindung geschaffene Freiheitsgrad, für jede Düsenöffnung eines Düsenkörpers eine individuelle Austrittsgeschwindigkeit der Reinigungsflüssigkeit zu wählen, ermöglicht eine bessere Optimierung einer Reinigungsvorrichtung mittels numerischer Methoden.

Durch die flexiblere Möglichkeit der Auslegung der Reinigungsdüsen kann die Anzahl der Reinigungsdüsen, Verrohrung und Dichtstellen reduziert werden. Der konstruktive Aufwand wird reduziert und die Zuverlässigkeit der Reinigungsvorrichtung bezüglich der Vibrationsbeständigkeit, der thermomechanischen Beständigkeit sowie der Flanschdichtheit der Verrohrung im Betrieb erhöht.

Durch den verminderten konstruktiven Aufwand können Kosten gesenkt werden.

Kurze Beschreibung der Zeichnungen

Im Folgenden ist anhand der Figuren ein Ausführungsbeispiel der erfindungsgemässen Reinigungsvorrichtung einer Abgasturbine dargestellt und deren Funktionsweise näher erläutert. In allen Figuren sind gleichwirkende Elemente mit gleichen Bezugzeichen versehen. Es zeigen

Fig. 1      einen Schnitt durch das Turbinengehäuse einer Abgasturbine mit einer Reinigungsvorrichtung mit einem Düsenkörper gemäss dem Stand der Technik,

Fig. 2      ein vergrössert dargestelltes Detail einer ersten Ausführungsform eines erfindungsgemäss ausgebildeten Düsenkörpers,

Fig. 3      ein vergrössert dargestelltes Detail einer zweiten Ausführungsform eines erfindungsgemäss ausgebildeten Düsenkörpers, und

Fig. 4      einen Schnitt durch das Turbinengehäuse einer Abgasturbine mit einer Reinigungsvorrichtung mit einem erfindungsgemäss ausgebildeten Düsenkörper.

Weg zur Ausführung der Erfindung

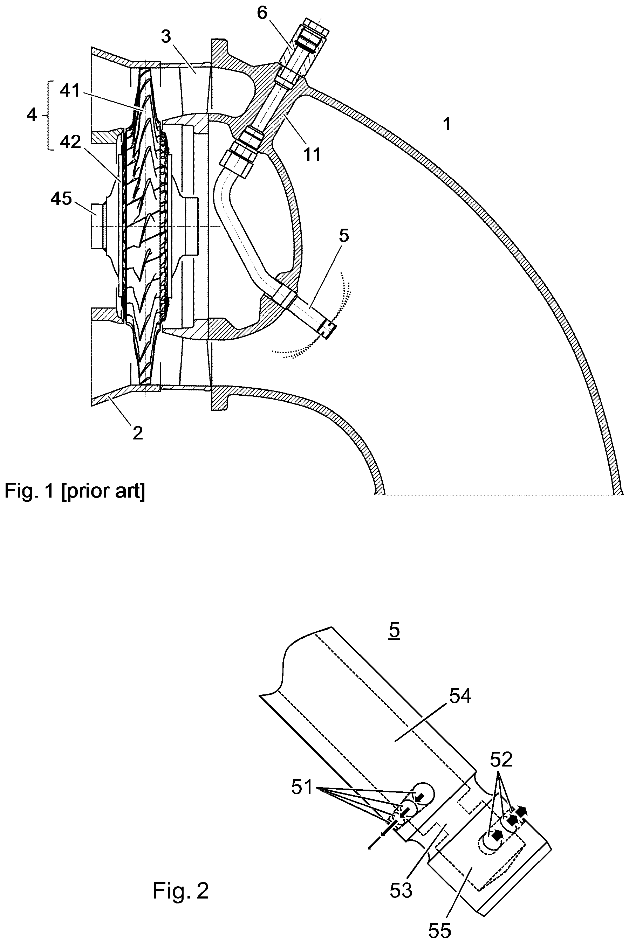

Fig. 1 zeigt in einem entlang der Turbinenachse geführten Schnitt einen Ausschnitt einer axial angeströmten Abgasturbine gemäss dem Stand der Technik. Das Gaseintrittsgehäuse 1 weist eine äussere sowie eine innere Gehäusewand auf, wobei die innere Gehäusewand kalottenförmig mit einem hohlen Innenraum ausgebildet ist und der Abdeckung des Nabenkörpers 42 des Turbinenrades gegenüber dem Strömungskanal dient.

Während dem Betrieb der Abgasturbine werden die von der Brennkraftmaschine ausgestossenen heissen Abgase zunächst in einem im Querschnitt zumindest annähernd kreisförmigen Abgasstrom in das Gaseintrittsgehäuse 1 der Abgasturbine geleitet. Durch die Wirkung der inneren Gehäusewand erfolgt eine Umwandlung in einen ringförmigen Abgasstrom, mit einer rechtwinklig auf die innere Gehäusewand auftreffenden Staupunktstromlinie. Der nunmehr ringförmige Abgasstrom wird zu den Laufschaufeln des Turbinenrades geführt. Dabei hat der stromauf der Laufschaufeln angeordnete Düsenring 3 (Leitvorrichtung) die Aufgabe, die Abgase optimal auf die Laufschaufeln des Turbinenrades auszurichten. Stromauf des Düsenrings 3 ist eine in den Strömungskanal mündende Reinigungsvorrichtung an der inneren Gehäusewand des Gaseintrittsgehäuses angeordnet. Diese Reinigungsvorrichtung umfasst einen Düsenkörper 5 welcher im Bereich der Staupunktstromlinie aus der inneren Gehäusewand in den Strömungskanal hineinragt. Der Düsenkörper umfasst mehrere Düsenöffnungen zum Einspritzen einer Reinigungsflüssigkeit in den Strömungskanal.

In der erfindungsgemäss ausgebildeten Reinigungsvorrichtung ist der herkömmliche Düsenkörper dahingehend modifiziert, dass gezielt in eine bestimmte Richtung im Strömungskanal eine bestimmte Reinigungsflüssigkeitsmenge mit einer bestimmten Austrittsgeschwindigkeit aus den Düsenöffnungen in den Strömungskanal austritt, um in diesem bestimmten Bereich eine optimale Reinigungswirkung zu erzielen. Dabei weist dieser erfindungsgemäss ausgestaltete Düsenkörper mehrere Düsenöffnungen auf, welche jeweils die Reinigungsflüssigkeit mit unterschiedlicher Austrittsgeschwindigkeit in den Strömungskanal abgeben.

Fig. 2 zeigt ein vergrössert dargestelltes Detail einer ersten Ausführungsform eines erfindungsgemäss ausgebildeten Düsenkörpers, bei welchem die Düsenöffnungen 51 und 52 in zwei Gruppen von Düsenöffnungen unterteilt sind. Die erste Gruppe der Düsenöffnungen 52 ist dabei stromabwärts einer Drosselstelle 53 in der Zuleitung zum Zuführen der Reinigungsflüssigkeit angeordnet, während die zweite Gruppe der Düsenöffnungen 51 stromaufwärts der Drosselstelle 53 in der Zuleitung zum Zuführen der Reinigungsflüssigkeit angeordnet ist. Durch die Drosselstelle 53 ergeben sich in der Zuleitung zu Zuführen der Reinigungsflüssigkeit zwei unterschiedliche Druckniveaus. Stromabwärts der Drosselstelle stellt sich in einer optional vorhandenen Niederdruck-Vorkammer 55 ein tieferer Druck ein, als in der optional vorhandenen Hochdruck-Vorkammer 54 stromaufwärts der Drosselstelle 53.

Die unterschiedlichen Druckverhältnisse alleine führen bereits dazu, dass, bei gleich grossen Düsenöffnungen, durch die Düsenöffnungen der beiden Gruppen unterschiedliche Mengen von Reinigungsflüssigkeiten mit unterschiedlicher Austrittsgeschwindigkeit in den Strömungskanal eingespritzt werden.

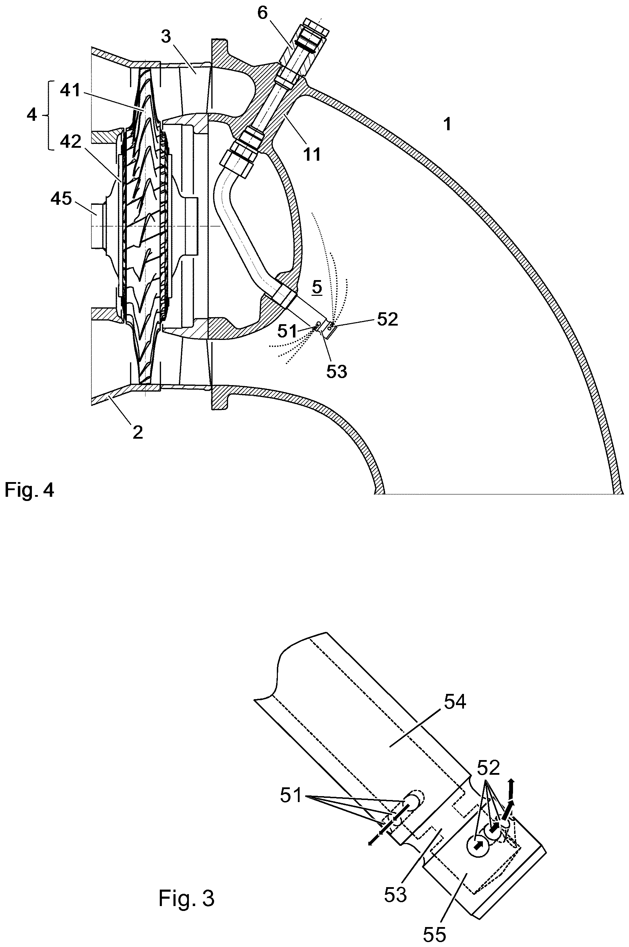

Durch gezieltes Einstellen der einzelnen Düsenöffnungen einer jeden Gruppe, beispielsweise durch Variieren der Grösse, Form und Ausrichtung der Düsenöffnung, können die mit der Drosselstelle erwirkten Effekte zusätzlich verstärkt werden. Somit lassen sich beinahe beliebige Benetzungsmuster generieren, so dass an speziell verschmutzten Stellen Reinigungsflüssigkeit zur Reinigung mit einer höheren Impulsstromdichte eingespritzt wird, als an einer anderen, weniger stark verschmutzten Stelle. Im konkreten Ausführungsbeispiel des Düsenkörpers nach Fig. 2 sind die Düsenöffnungen der zweiten Gruppe, also die Hochdruck-Düsenöffnungen 51, unterschiedliche gross im Durchmesser, während die Düsenöffnungen der ersten Gruppe, also die Niederdruck-Düsenöffnungen 52, allesamt gleich gross im Durchmesser sind. Im konkreten Ausführungsbeispiel des Düsenkörpers nach Fig. 3 sind die Düsenöffnungen der zweiten Gruppe, also die Hochdruck-Düsenöffnungen 51, allesamt gleich gross im Durchmesser, während die Düsenöffnungen der ersten Gruppe, also die Niederdruck-Düsenöffnungen 52, erstens unterschiedlich gross im Durchmesser sind und zweitens die Kanäle welche unmittelbar zu den Düsenöffnungen führen bezüglich der radialen Richtung des Düsenkörpers geneigt sind. Die Neigung der Kanäle ergibt eine von der radialen Richtung abweichende Ausrichtung des aus den Düsenöffnungen austretenden Strahls, womit wiederum gezielt bestimmte Bereiche des umliegenden Gehäuses optimal gereinigt werden können. Fig. 4 zeigt einen erfindungsgemäss ausgebildeten Düsenkörper im eingebauten Zustand. Dabei ist mit den gepunkteten Linien angedeutet, dass die Reinigungsflüssigkeit gegenüber der in Fig. 1 dargestellten Ausführungsform einerseits unterschiedlich stark, aber auch unterschiedliche ausgerichtet, aus den Düsenöffnungen austritt.

Bezugszeichenliste

| 1 | Gaseintrittsgehäuse |
| 2 | Gasaustrittsgehäuse |
| 3 | Düsenring |
| 4 | Turbinenrad |
| 41 | Laufschaufeln des Turbinenrades |
| 42 | Nabenkörper des Turbinenrades |
| 45 | Turbinenwelle |
| 5 | Düsenkörper der Reinigungsvorrichtung |
| 51 | Hochdruck-Düsenöffnungen |
| 52 | Niederdruck-Düsenöffnungen |
| 53 | Drosselstelle (Verengung) |
| 54 | Hochdruck-Vorkammer |
| 55 | Niederdruck-Vorkammer |
| 6 | Zuleitung für Reinigungsflüssigkeit |

**Patentansprüche**

1.  Reinigungsvorrichtung einer Abgasturbine, umfassend mindestens einen Düsenkörper (5) zum Einspritzen von Reinigungsflüssigkeit in den Strömungskanal einer Abgasturbine, wobei der Düsenkörper (5) mehrere Düsenöffnungen (51, 52) umfasst, wobei die mehreren Düsenöffnungen (51, 52) unterteilt sind in mindestens eine erste Düsenöffnung (52) und mindestens eine zweite Düsenöffnung (52), wobei in einer Zuleitung zum Zuführen der Reinigungsflüssigkeit zu der mindestens einen ersten Düsenöffnung (52) eine erste Drosselstelle (53, 532) angeordnet ist, **dadurch gekennzeichnet, dass** die mindestens eine zweite Düsenöffnung (52) in der Zuleitung zum Zuführen der Reinigungsflüssigkeit stromaufwärts der Drosselstelle (53) angeordnet ist, so dass sich durch die Drosselstelle (53) in der Zuleitung zum Zuführen der Reinigungsflüssigkeit zwei unterschiedliche Druckniveaus einstellen.

2.  Reinigungsvorrichtung nach Anspruch 1, wobei mindestens eine erste Düsenöffnung und mindestens eine zweite Düsenöffnung unterschiedlich grosse Querschnittsflächen aufweisen.

3. Reinigungsvorrichtung nach einem der Ansprüche 1 oder 2, wobei in einer Gruppe von mehreren, ersten Düsenöffnungen, mindestens zwei Düsenöffnungen unterschiedlich grosse Querschnittsflächen aufweisen.

4. Reinigungsvorrichtung nach einem der Ansprüche 1 oder 2, wobei in einer Gruppe von mehreren, zweiten Düsenöffnungen, mindestens zwei Düsenöffnungen unterschiedlich grosse Querschnittsflächen aufweisen.

5. Reinigungsvorrichtung nach einem der Ansprüche 1 bis 4, wobei mindestens zwei Düsenöffnungen in verschiedenen Winkeln von der jeweiligen radialen Richtung abweichend durch den Düsenkörper geführt sind, so dass beim Einspritzen der Reinigungsflüssigkeit die Reinigungsflüssigkeit in verschiedenen Winkeln von der jeweiligen radialen Richtung abweichend aus dem Düsenkörper austritt.

6. Abgasturbine mit einer Reinigungsvorrichtung nach einem der Ansprüche 1 bis 5.

7. Nutzturbine mit einer Reinigungsvorrichtung nach einem der Ansprüche 1 bis 5.

8. Abgasturbolader, umfassend eine Abgasturbine mit einer Reinigungsvorrichtung nach einem der Ansprüche 1 bis 5.

**Claims**

1. Cleaning device of an exhaust-gas turbine, comprising at least one nozzle body (5) for injecting cleaning liquid into the flow channel of an exhaust-gas turbine, wherein the nozzle body (5) comprises multiple nozzle openings (51, 52), wherein the multiple nozzle openings (51, 52) are divided into at least one first nozzle opening (52) and at least one second nozzle opening (52), wherein a first throttle point (53, 532) is arranged in a feed line for supplying the cleaning liquid to the at least one first nozzle opening (52), **characterized in that** the at least one second nozzle opening (52) is arranged in the feed line for supplying the cleaning liquid upstream of the throttle point (53), such that, owing to the throttle point (53) in the feed line for supplying the cleaning liquid, two different pressure levels are set.

2. Cleaning device according to Claim 1, wherein at least one first nozzle opening and at least one second nozzle opening have cross-sectional areas of different size.

3. Cleaning device according to either of Claims 1 and 2, wherein, in a group of multiple first nozzle openings, at least two nozzle openings have cross-sectional areas of different size.

4. Cleaning device according to either of Claims 1 and 2, wherein, in a group of multiple second nozzle openings, at least two nozzle openings have cross-sectional areas of different size.

5. Cleaning device according to one of Claims 1 to 4, wherein at least two nozzle openings are led through the nozzle body so as to deviate from the respective radial direction by different angles, such that, during the injection of the cleaning liquid, the cleaning liquid emerges from the nozzle body so as to deviate from the respective radial direction by different angles.

6. Exhaust-gas turbine having a cleaning device according to one of Claims 1 to 5.

7. Power turbine having a cleaning device according to one of Claims 1 to 5.

8. Exhaust-gas turbocharger, comprising an exhaust-gas turbine having a cleaning device according to one of Claims 1 to 5.

**Revendications**

1. Dispositif de nettoyage d'une turbine à gaz d'échappement, comprenant au moins un corps de buse (5) pour injecter un liquide de nettoyage dans le conduit d'écoulement d'une turbine à gaz d'échappement, le corps de buse (5) comprenant plusieurs ouvertures de buse (51, 52), les ouvertures de buse (51, 52) étant divisées en au moins une première ouverture de buse (52) et au moins une deuxième ouverture de buse (52), un premier étranglement (53, 532) étant disposé dans une conduite d'amenée destinée à acheminer le liquide de nettoyage à l'au moins une première ouverture de buse (52), **caractérisé en ce que** l'au moins une deuxième ouverture de buse (52) est disposée dans la conduite d'amenée destinée à acheminer le liquide de nettoyage en amont de l'étranglement (53) de telle sorte que deux niveaux de pression différents s'établissent par le biais de l'étranglement (53) dans la conduite d'amenée destinée à acheminer le liquide de nettoyage.

2. Dispositif de nettoyage selon la revendication 1, dans lequel au moins une première ouverture de buse et au moins une deuxième ouverture de buse présentent des surfaces en section transversale de tailles différentes.

**3.** Dispositif de nettoyage selon l'une quelconque des revendications 1 ou 2, dans lequel, dans un groupe de plusieurs premières ouvertures de buse, au moins deux ouvertures de buse présentent des surfaces en section transversale de tailles différentes.

**4.** Dispositif de nettoyage selon l'une quelconque des revendications 1 et 2, dans lequel, dans un groupe de plusieurs deuxièmes ouvertures de buse, au moins deux ouvertures de buse présentent des surfaces en section transversale de tailles différentes.

**5.** Dispositif de nettoyage selon l'une quelconque des revendications 1 à 4, dans lequel au moins deux ouvertures de buse sont guidées suivant des angles différents à travers le corps de buse en s'écartant de la direction radiale respective de telle sorte que lors de l'injection du liquide de nettoyage, le liquide de nettoyage sorte hors du corps de buse suivant des angles différents en s'écartant de la direction radiale respective.

**6.** Turbine à gaz d'échappement comprenant un dispositif de nettoyage selon l'une quelconque des revendications 1 à 5.

**7.** Turbine de puissance se comprenant un dispositif de nettoyage selon l'une quelconque des revendications 1 à 5.

**8.** Turbocompresseur à gaz d'échappement comprenant une turbine à gaz d'échappement comprenant un dispositif de nettoyage selon l'une quelconque des revendications 1 à 5.

6

3

41

4

42

45

11

1

5

2

Fig. 1 [prior art]

5

54

52

51

53

55

Fig. 2

Fig. 4

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3515825 A1
- WO 2006017952 A1
- EP 848150 B1
- WO 2005049972 A1
- DE 2120213
- US 5944483 A
- US 20100206966 A1
- DE 10354864 A1
- US 2009084411 A1